# EUROPEAN PATENT APPLICATION

(11) **EP 4 484 143 A1**
(43) Date of publication of application: **01.01.2025**
(21) Application number: 24165923.4
(22) Date of filing: 25.03.2024
(51) Int. Cl.: B29C 73/16, B29D 30/00, B29D 30/06, B60C 19/00, B60C 19/12

(54) **PNEUMATIC TIRE, PUNCTURE REPAIR METHOD FOR PNEUMATIC TIRE, AND VEHICLE**

(30) Priority: 28.06.2023 JP 2023106274
(71) Applicant: Sumitomo Rubber Industries, Ltd., Kobe-shi, Hyogo 651-0072 (JP)
(72) Inventor: YUKAWA, Naoki, Hyogo 651-0072 (JP); SATO, Takuya, Hyogo 651-0072 (JP); MATSUNAMI, Sho, Hyogo 651-0072 (JP)
(74) Representative: Manitz Finsterwald Patent- und Rechtsanwaltspartnerschaft mbB

(57) **Abstract**

In a pneumatic tire (1) having a porous noise damper (10) in a tire inner cavity (1B), and the like, puncture repairability is maintained. The present invention is a pneumatic tire (1) which is to be mounted to a vehicle (25) equipped with a puncture repair kit (20) including a puncture sealant, and for which puncture repair is performed by injecting the puncture sealant into the tire. The pneumatic tire according to the present invention includes a pneumatic tire body (1A) defining a tire inner cavity (1B), and a porous noise damper (10) disposed in the tire inner cavity (1B). The noise damper (10) is not fixed to the pneumatic tire body (1A) in the tire inner cavity (1B), and is configured to be freely removable from the pneumatic tire body (1A). An air permeability of the noise damper (10) as measured in accordance with JIS K6400-7 is 27 ml/cm²/s or less.

## Description

### BACKGROUND OF THE INVENTION

### Field of the Invention

The present invention relates to a pneumatic tire, a puncture repair method for the pneumatic tire, and a vehicle.

### Background Art

Japanese Laid-Open Patent Publication No. 2022-069984 proposes a pneumatic tire in which a porous noise damper is fixed to an inner surface of a tread portion. Such a pneumatic tire is expected to have an improved noise damping effect by the noise damper.

In recent years, puncture repair kits which allow, when a pneumatic tire is punctured, a hole in the tire to be closed by injecting a puncture sealant into the tire inner cavity have become widespread. Vehicles are increasingly equipped with such puncture repair kits instead of spare tires.

When a pneumatic tire having the above-described porous noise damper is repaired by using the above-described puncture repair kit, the noise damper may hinder the puncture sealant from flowing into a puncture hole, resulting in impairment of puncture repairability.

The present invention has been made in view of the aforementioned circumstances. A main object of the present invention is to maintain puncture repairability in, for example, a pneumatic tire having a porous noise damper in a tire inner cavity.

### SUMMARY OF THE INVENTION

The present invention is directed to a pneumatic tire which is to be mounted to a vehicle equipped with a puncture repair kit including a puncture sealant, and for which puncture repair is performed by injecting the puncture sealant into the tire. The pneumatic tire includes: a pneumatic tire body defining a tire inner cavity; and a porous noise damper disposed in the tire inner cavity. The noise damper is not fixed to the pneumatic tire body in the tire inner cavity, and is configured to be freely removable from the pneumatic tire body. An air permeability of the noise damper as measured in accordance with JIS K6400-7 is 27 ml/cm²/s or less.

The pneumatic tire according to the present invention has the above-described configuration and can thus maintain puncture repairability.

### BRIEF DESCRIPTION OF THE DRAWINGS

FIG. 1 is a tire meridian cross-sectional view of a pneumatic tire according to an embodiment of the present invention;
FIG. 2 is an enlarged perspective view of a pneumatic tire body and a noise damper in FIG. 1;
FIG. 3 is an enlarged cross-sectional view of the noise damper in FIG. 1;
FIG. 4 is a conceptual diagram illustrating a side surface of the tire in FIG. 1;
FIG. 5 is a conceptual diagram illustrating a side surface of a tire of another embodiment;
FIG. 6 is an enlarged cross-sectional view of a noise damper of still another embodiment;
FIG. 7 is a conceptual diagram of a puncture repair kit used in the present invention;
FIG. 8 is a flow chart showing a puncture repair method for the pneumatic tire according to the present invention; and
FIG. 9 is a conceptual diagram of a vehicle to which the pneumatic tire according to the present invention is mounted.

### DETAILED DESCRIPTION

An embodiment of the present invention will be described below with reference to the accompanying drawings. Although the drawings represent features of the present invention, the drawings may include exaggerated representations and the dimensional ratios may be expressed so as to be different from those of the actual structure, for ease of understanding of the present invention. In addition, the same or common components are denoted by the same reference characters throughout embodiments, and will not be redundantly described.

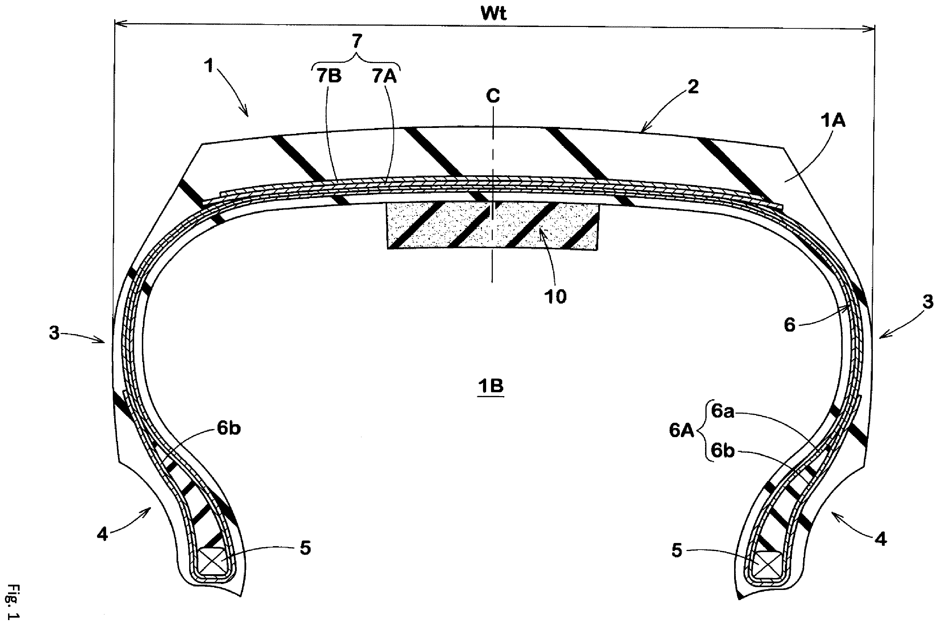

FIG. 1 is a tire meridian cross-sectional view of a pneumatic tire (hereinafter, may be simply referred to as a "tire") 1, in a standardized state, according to an embodiment of the present invention. FIG. 1 shows a cross-section of the annularly extending tire 1 as taken along an imaginary plane that passes through the tire rotation axis and is orthogonal to the tire circumferential direction. As shown in FIG. 1, in the present embodiment, the pneumatic tire 1 is for a passenger car. However, the present invention may be applied to, for example, the heavy duty pneumatic tire 1.

The "standardized state" represents a state in which a tire is mounted on a standardized rim and is inflated to a standardized internal pressure and no load is applied to the tire, in a case where the tire is a pneumatic tire for which various standards are defined. For tires for which various standards are not defined, the standardized state represents a standard use state, corresponding to a purpose of use of the tire, in which the tire is not mounted to a vehicle and no load is applied to the tire. In the description herein, unless otherwise specified, dimensions and the like of components of the tire are represented as values measured in the standardized state.

The "standardized rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "standardized internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The tire 1 according to the present invention is mounted to a vehicle that is equipped with a puncture repair kit including a puncture sealant. The puncture repair kit allows puncture repair to be performed by injecting the puncture sealant through an air valve of a punctured tire. The puncture sealant injected into the tire is cured as the sealant passes through a puncture hole and can close the puncture hole. In addition, in the tire 1 according to the present invention, puncture repair can be performed by injecting the puncture sealant into the tire through the air valve as described above, and therefore, in the tire 1 according to the present invention, a tread portion 2 has such a stiffness that the closed puncture hole is not opened even by running with the tire after the puncture repair. Specifically, the tread portion 2 includes at least a carcass 6 and a belt layer 7 described below.

The carcass 6 extends from one of bead portions 4 to the other of the bead portions 4 through one of sidewall portions 3, the tread portion 2, and the other of the sidewall portions 3. The carcass 6 has at least one carcass ply 6A and has two carcass plies 6A in the present embodiment. In the carcass ply 6A, for example, an array of carcass cords is covered with topping rubber. The carcass cords are, for example, arranged at an angle of 75 to 90° with respect to the tire circumferential direction. For the carcass cords, for example, organic fibers such as polyester fibers, nylon fibers, rayon fibers, polyethylene naphthalate fibers, or aramid fibers are used.

The carcass ply 6A includes, for example, a body portion 6a and turned-up portions 6b. The body portion extends from the tread portion 2 to bead cores 5 through the sidewall portions 3. The turned-up portions 6b are continuous with the body portion 6a, and are each turned up around the bead core 5 from the inner side to the outer side in the tire axial direction and extend outward in the tire radial direction.

The belt layer 7 is disposed outward of the carcass 6 in the tire radial direction in the tread portion 2. The belt layer 7 includes at least one belt ply. In the present embodiment, the belt layer 7 includes two belt plies 7A and 7B. For example, the belt plies 7A and 7B are each formed of an array of belt cords covered with topping rubber.

In addition, the tire 1 according to the present invention includes a pneumatic tire body 1A that defines a tire inner cavity 1B, and a porous noise damper 10 that is disposed in the tire inner cavity 1B. The noise damper 10 is capable of absorbing vibrations of air in the tire 1 during running with the tire 1, and contributes to reduction of noise generated by the tire.

Meanwhile, conventionally, when a pneumatic tire having a porous noise damper is repaired by using the above-described puncture repair kit, the noise damper may hinder the puncture sealant from flowing into a puncture hole, resulting in impairment of puncture repairability. Specifically, the porous noise damper may absorb a part of the puncture sealant, so that the puncture sealant may be unlikely to reach a puncture hole.

Meanwhile, the noise damper 10 according to the present invention is not fixed to the pneumatic tire body 1A in the tire inner cavity 1B, and can be freely removed from the pneumatic tire body 1A. The air permeability of the noise damper 10 according to the present invention as measured in accordance with JIS K6400-7 is 27 ml/cm²/s or less.

As described above, in the present invention, the noise damper 10 can be freely removed from the pneumatic tire body 1A, and therefore, the puncture sealant is likely to reach a puncture hole. In addition, in the present invention, the air permeability of the noise damper 10 is specified as described above, and therefore, the puncture sealant is unlikely be absorbed by the noise damper 10. Thus, puncture repairability can be reliably maintained.

In addition, conventionally, when a pneumatic tire having a porous noise damper is repaired by using the above-described puncture repair kit, a part of the puncture sealant is absorbed also by the noise damper, so that the weight of the noise damper is locally increased. Such a weight imbalance of the noise damper increases vibrations during running with the tire, and therefore, the tire needs to be replaced after the puncture repair. Meanwhile, in the present invention, after the puncture repair described above, the noise damper 10 that has absorbed a part of the puncture sealant can be easily removed from the pneumatic tire body 1A, and therefore, vibrations during running with the tire are inhibited and the tire can be continuously used.

The configurations of the present embodiment will be described below in more detail. The configurations described below represent a specific mode of the present embodiment. Therefore, it is needless to say that the present invention can exhibit the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to the configurations can be expected.

The dimensions of the noise damper 10 described below are measured in a state where the tire 1 is not mounted on a rim, a distance between the pair of the bead cores 5 is set so as to correspond to the above-described standardized state, and the noise damper 10 is disposed in the tire inner cavity 1B, unless otherwise specified.

The noise damper 10 is, for example, formed of a porous sponge material. The sponge material is, for example, foam of rubber or synthetic resin, and is open-cell foamed. In a preferable embodiment, as the noise damper 10, polyurethane sponge having both an ether bond and an ester bond is used. However, the present invention is not limited thereto.

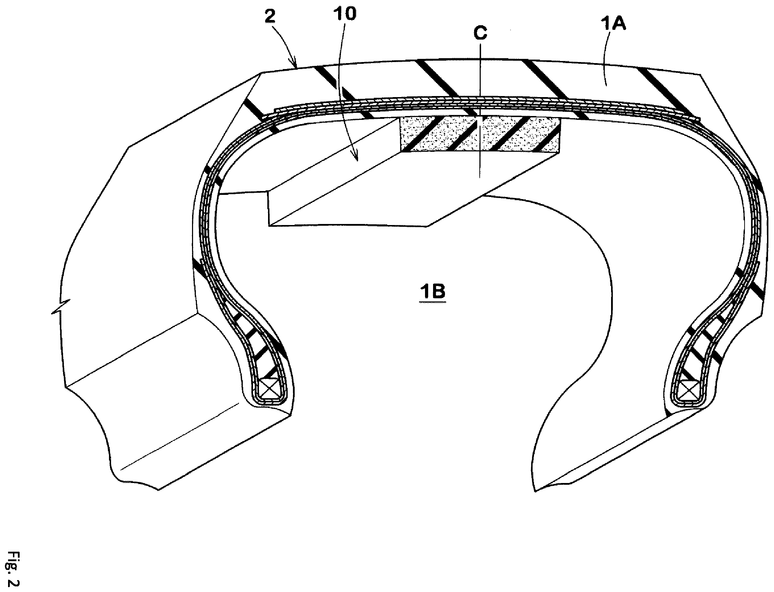

FIG. 2 is an enlarged perspective view of the pneumatic tire body 1A and the noise damper 10 in FIG. 1. As illustrated in FIG. 2, the noise damper 10 is in contact with a surface of the tread portion 2 on the tire inner cavity 1B side (the noise damper 10 is not fixed to the surface). An outer side surface of the noise damper 10 in the tire radial direction is planar. A cross-section of the noise damper 10 orthogonal to the tire circumferential direction is rectangular. In a preferable embodiment, the cross-section of the noise damper 10 has a rectangular shape laterally elongated in the tire axial direction. The noise damper 10 is in contact with almost the entirety (80% or more) of the tire inner cavity 1B in the tire circumferential direction. The noise damper 10 thus configured can exhibit excellent noise damping effect and durability.

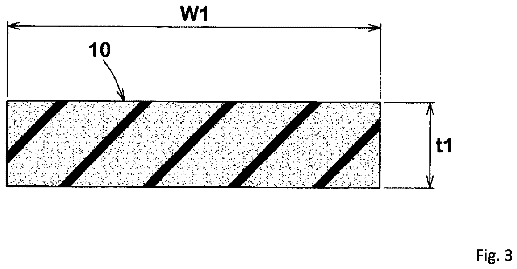

FIG. 3 is an enlarged cross-sectional view of the noise damper 10. As illustrated in FIG. 3, the greatest thickness t1 of the noise damper 10 in the tire radial direction is 10 to 40 mm. In addition, the greatest width W1 of the noise damper 10 in the tire axial direction is 20 to 80% and preferably 20 to 40% of a cross-sectional width Wt (see FIG. 1) of the pneumatic tire body 1A. The noise damper 10 thus configured is unlikely to be separated from the pneumatic tire body 1A during running with the tire. Therefore, the wear of the noise damper 10 is inhibited.

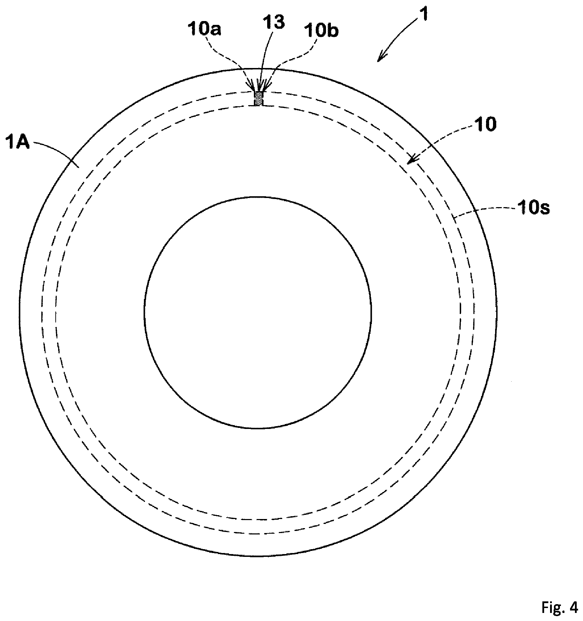

FIG. 4 is a conceptual diagram illustrating a side surface of the tire 1. In FIG. 4, the noise damper 10 is indicated by a dashed line. As illustrated in FIG. 4, the noise damper 10 of the present embodiment has an annular structure including a first end 10a in the tire circumferential direction, a second end 10b in the tire circumferential direction, and an adhering portion 13 that adheres the first end 10a and the second end 10b to each other. In FIG. 4, the adhering portion 13 is indicated by dots. In the noise damper 10 thus configured, the end portions of the noise damper 10 can be inhibited from coming into contact with the rim or the like and being worn, thereby exhibiting excellent durability.

The first end 10a and the second end 10b are, for example, adhered to each other with an adhesive agent. In another embodiment, the first end 10a and the second end 10b may be welded to each other (the sponge material is melted by heat to adhere the first end 10a and the second end 10b).

In the present embodiment, the annular noise damper 10 is slightly compressed and disposed in the tire inner cavity 1B, and therefore, is not locally lifted from the pneumatic tire body 1A, and 90% or more, preferably, the entirety, of an outer side surface 10s of the noise damper 10 in the tire radial direction is in contact with the pneumatic tire body 1A. The noise damper 10 thus configured is allowed to rotate together with the tire 1 although the noise damper 10 is not fixed to the pneumatic tire body 1A. Therefore, the noise damper 10 is unlikely to be worn and durability is improved.

In order to achieve the above-described configuration, in a natural state in which the first end 10a and the second end 10b of the noise damper 10 are not adhered to each other, and the noise damper 10 is linearly extended on a plane, the greatest length of the noise damper 10 from the first end 10a to the second end 10b is preferably 94 to 107% of the greatest circumferential length of the tire inner cavity 1B (see FIG. 1). The greatest circumferential length of the tire inner cavity 1B refers to the greatest length, in the tire circumferential direction, of the inner surface of the pneumatic tire body 1A. In the present embodiment in which the tread portion 2 is curved so as to protrude outward in the tire radial direction, the length of the circumference of a circle formed by the inner surface of the pneumatic tire body 1A and the tire equator plane intersecting each other corresponds to the greatest circumferential length.

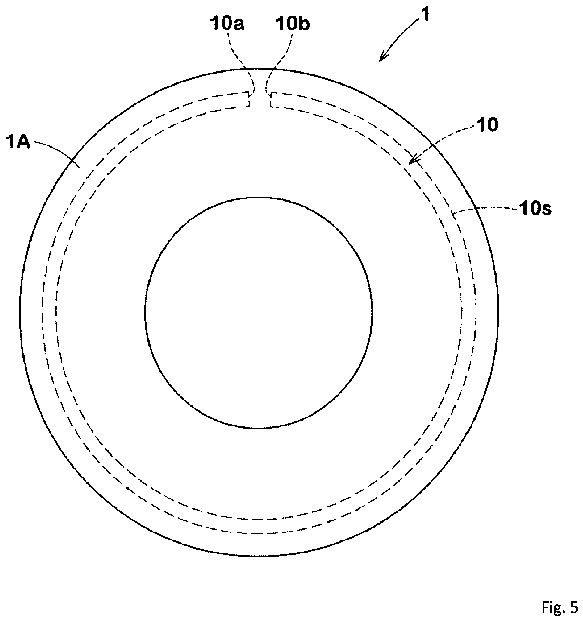

FIG. 5 is a diagram illustrating a side surface of a tire 1 of another embodiment. As illustrated in FIG. 5, the noise damper 10 of the present embodiment has a non-annular structure that has a first end 10a in the tire circumferential direction, and a second end 10b, in the tire circumferential direction, which is not adhered to the first end 10a. The noise damper 10 thus configured contributes to easy replacement after use of the puncture sealant.

The greatest length of the noise damper 10 from the first end 10a to the second end 10b is preferably 85 to 99% of the greatest circumferential length of the tire inner cavity 1B. Thus, the noise damper 10 can exhibit a sufficient noise damping effect and can be easily replaced.

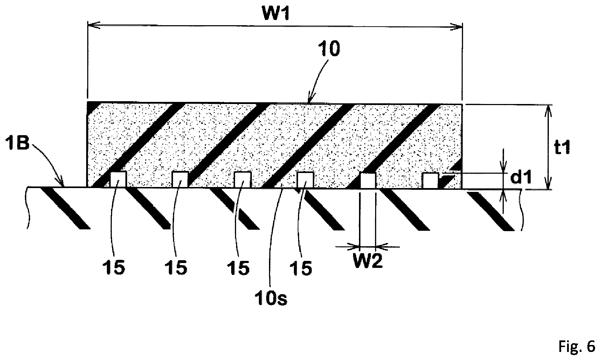

FIG. 6 is an enlarged cross-sectional view of a noise damper 10 of still another embodiment. As illustrated in FIG. 6, in the noise damper 10 of the present embodiment, at least one groove 15 is formed in the outer side surface 10s (surface on the tire inner cavity 1B side) in the tire radial direction. In a preferable embodiment, a plurality of the grooves 15 extending continuously in the tire circumferential direction are formed in the tire axial direction. An opening width W2 of the groove 15 is 3 to 10% of the greatest width W1 of the noise damper 10 in the tire axial direction. A depth d1 of the groove 15 is, for example, 15 to 20% of the greatest thickness t1 of the noise damper 10. The groove 15 thus configured allows a puncture sealant to easily reach a puncture hole during puncture repair.

The groove 15 is not limited to the above-described configuration. For example, the groove 15 may extend in the tire axial direction (not illustrated). For example, the groove 15 thus configured allows a puncture sealant to easily move also in the tire axial direction, and the above-described effect can be further enhanced.

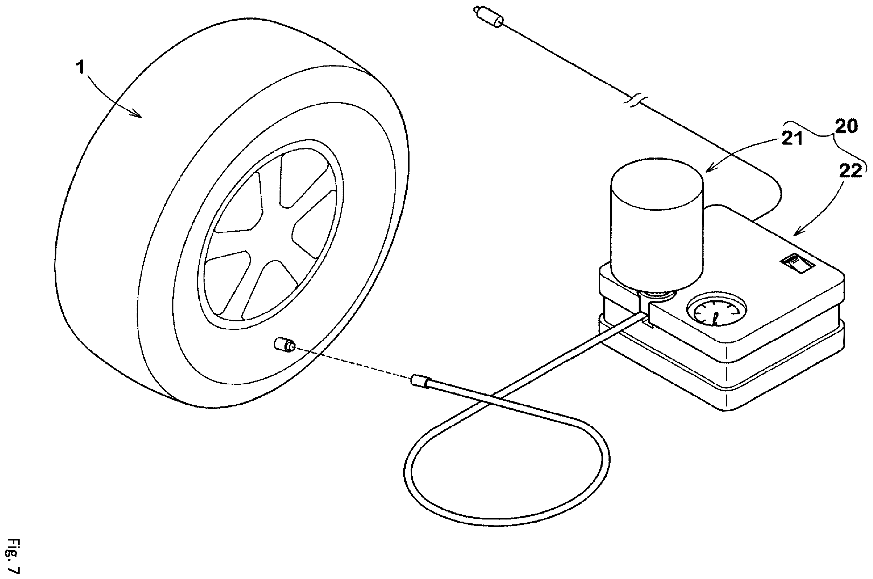

A second aspect of the present invention is a puncture repair method for the above-described pneumatic tire 1. FIG. 7 is a conceptual diagram of a puncture repair kit 20 used in the present invention. In FIG. 7, the puncture repair kit 20 is expressed at a larger scale than an actual scale as compared with the tire 1. The puncture repair kit 20 includes a bottle unit 21 containing a puncture sealant, and a compressor 22 capable of supplying high-pressure air. The bottle unit 21 is preferably mounted to the compressor 22 in use.

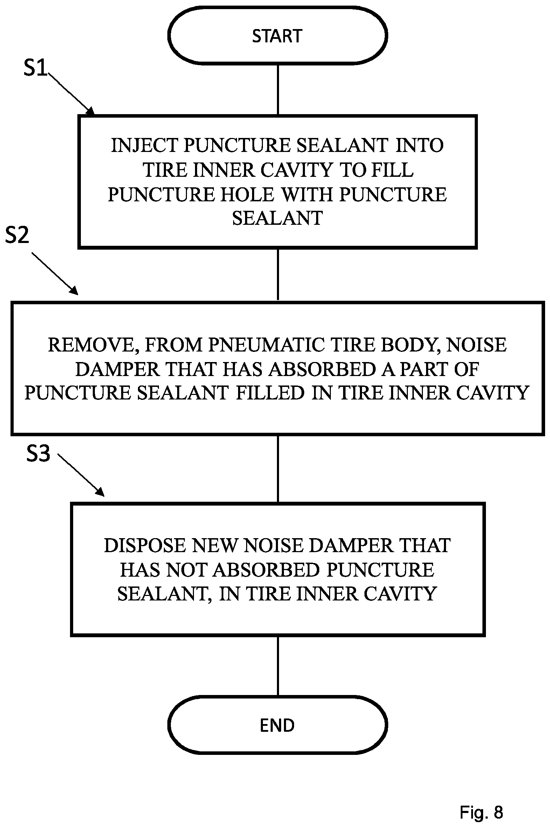

FIG. 8 is a flow chart showing the puncture repair method for the pneumatic tire according to the present invention. As shown in FIG. 8, the puncture repair method includes at least a first step S1 and a second step S2 described below.

In the first step S1, as in conventional practice, for example, by using the puncture repair kit 20 in FIG. 7, a puncture sealant is injected into the tire inner cavity, and a puncture hole is filled with the puncture sealant. Thereafter, the air pressure of the tire is adjusted as appropriate, so that running with the tire can be performed as usual.

Conventionally, a part of the puncture sealant is absorbed also by the noise damper, so that vibrations of the tire increase during running after the first step S1. Therefore, the tire needs to be replaced even when no other portions of the tire have any failure.

Meanwhile, in the second step S2 of the puncture repair method according to the present invention, the noise damper that has absorbed a part of the puncture sealant filled in the tire inner cavity 1B is removed from the pneumatic tire body 1A. In the present invention, the noise damper 10 is not fixed in the tire inner cavity 1B, and therefore, this operation can be easily carried out. Therefore, the tire can be continuously used after the puncture repair.

The puncture repair method according to the present invention preferably further includes a third step S3 of disposing, in the tire inner cavity, a new noise damper that has not absorbed a puncture sealant, after the second step S2. Thus, the noise damping effect is recovered, and thereafter, the tire can be continuously used.

However, the present invention is not limited thereto. In another embodiment, after the second step S2, the tire may be used without disposing a new noise damper 10 in the pneumatic tire body 1A. The puncture repair method according to the present invention may also include a step of removing the puncture sealant remaining in the tire inner cavity 1B.

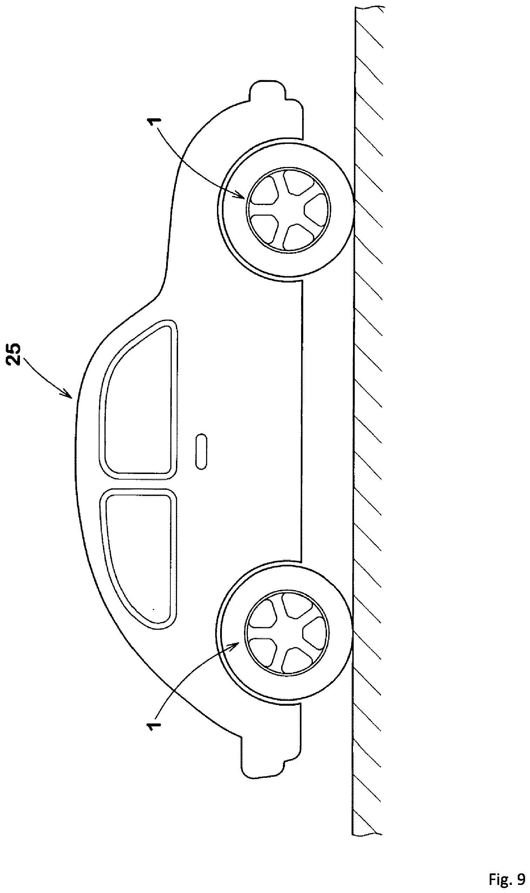

FIG. 9 is a conceptual diagram of a vehicle 25 to which the pneumatic tire 1 according to the present invention is mounted. This vehicle has the tire 1 (see FIG. 1) mounted thereto and is equipped with the puncture repair kit 20 (see FIG. 7). Therefore, the vehicle 25 can maintain puncture repairability, and can continue to use the tire even after puncture repair.

The vehicle 25 is not equipped with a spare tire, and, instead thereof, has the tire 1 mounted thereto and is equipped with the puncture repair kit 20. A vehicle that is not equipped with a spare tire can be expected to have improved fuel economy performance, and can assure a wide vehicle interior space.

Although the pneumatic tire and the like according to the embodiments of the present invention have been described above in detail, the present invention is not limited to the above-described specific embodiments, and various modifications can be made to implement the present invention.

### Examples

A pneumatic tire having the fundamental structure shown in FIG. 1 and a size of 215/55R17 was produced based on specifications indicated in Table 1. In addition, as a comparative example, a pneumatic tire that included a noise damper having an air permeability of 42 ml/cm²/s was produced as a test tire. The tire of the comparative example was substantially the same as the tire of the example except for the above-described matter. An air seal test was conducted on these test tires. Specifications common to the test tires and a testing method were as follows.
Rim on which the tire was mounted: 17 × 7.5 J
Tire internal pressure: 250 kPa

### <Air Seal Test>

A puncture hole was formed in each test tire by causing a nail having a diameter of 5 mm to penetrate through the tire at the center of the tread. Thereafter, the nail was removed. Immediately after that, 400 ml of a puncture sealant was injected into the tire inner cavity. Immediately after that, the tire internal pressure was adjusted to 250 kPa. Running with the test tire was performed on a drum tester at a speed of 30 to 60 km/h for 15 minutes. Thereafter, presence or absence of air leakage from the puncture hole was checked. When there was no air leakage, the test tire was determined to have passed the test.

The result of the test is indicated in Table 1.

**Table 1**

| | Comparative example | Example 1 | Example 2 |
|---|---|---|---|
| Air permeability of noise damper (ml/cm²/s) | 42 | 27 | 2 |
| Air seal test | Failed | Passed | Passed |

As indicated in Table 1, the tire of the comparative example failed in the air seal test because the noise damper had a high air permeability, whereas the tires of the examples passed the air seal test. Thus, it was confirmed that the tires of the examples maintained puncture repairability.

### Appendixes

The present invention includes the following aspects.

### [Present Invention 1]

A pneumatic tire which is to be mounted to a vehicle equipped with a puncture repair kit including a puncture sealant, and for which puncture repair is performed by injecting the puncture sealant into the tire, the pneumatic tire including:
a pneumatic tire body defining a tire inner cavity; and
a porous noise damper disposed in the tire inner cavity, in which
the noise damper is not fixed to the pneumatic tire body in the tire inner cavity, and is configured to be freely removable from the pneumatic tire body, and
an air permeability of the noise damper as measured in accordance with JIS K6400-7 is 27 ml/cm²/s or less.

### [Present Invention 2]

The pneumatic tire according to Present Invention 1, in which the noise damper has an annular structure including a first end in a tire circumferential direction, a second end in the tire circumferential direction, and an adhering portion for adhering the first end and the second end to each other.

### [Present Invention 3]

The pneumatic tire according to Present Invention 2, in which a greatest length of the noise damper from the first end to the second end is 94 to 107% of a greatest circumferential length of the tire inner cavity, in a natural state in which the first end and the second end of the noise damper are not adhered to each other.

### [Present Invention 4]

The pneumatic tire according to Present Invention 1, in which the noise damper has a non-annular structure having a first end in a tire circumferential direction, and a second end, in the tire circumferential direction, which is not adhered to the first end.

### [Present Invention 5]

The pneumatic tire according to Present Invention 4, in which a greatest length of the noise damper from the first end to the second end is 85 to 99% of a greatest circumferential length of the tire inner cavity.

### [Present Invention 6]

The pneumatic tire according to any one of Present Inventions 1 to 5, in which an outer side surface of the noise damper in a tire radial direction is planar.

### [Present Invention 7]

The pneumatic tire according to any one of Present Inventions 1 to 6, in which the noise damper is formed of polyurethane sponge having both an ether bond and an ester bond.

### [Present Invention 8]

The pneumatic tire according to any one of Present Inventions 1 to 7, in which a greatest thickness of the noise damper in a tire radial direction is 10 to 40 mm.

### [Present Invention 9]

The pneumatic tire according to any one of Present Inventions 1 to 8, in which a greatest width of the noise damper in a tire axial direction is 20 to 80% of a cross-sectional width of the pneumatic tire body.

### [Present Invention 10]

The pneumatic tire according to any one of Present Inventions 1 to 9, in which a cross-section, of the noise damper, orthogonal to a tire circumferential direction is rectangular.

### [Present Invention 11]

A puncture repair method for a pneumatic tire, in which
the pneumatic tire includes a pneumatic tire body defining a tire inner cavity, and a porous noise damper disposed in the tire inner cavity,
the noise damper is not fixed to the pneumatic tire body in the tire inner cavity, and is configured to be freely removable from the pneumatic tire body, the puncture repair method including:
   a first step of injecting a puncture sealant into the tire inner cavity to fill a puncture hole with the puncture sealant; and
   a second step of removing, from the pneumatic tire body, the noise damper that has absorbed a part of the puncture sealant filled in the tire inner cavity.

### [Present Invention 12]

The puncture repair method for a pneumatic tire according to Present Invention 11, further including a third step of disposing, in the tire inner cavity, a new noise damper that has not absorbed the puncture sealant, after the second step.

### [Present Invention 13]

The puncture repair method for a pneumatic tire according to Present Invention 11, in which a new noise damper is not disposed in the pneumatic tire body after the second step.

### [Present Invention 14]

A vehicle including:
a pneumatic tire mounted thereto; and
a puncture repair kit for repairing a puncture of the pneumatic tire, in which
the puncture repair kit is configured to inject a puncture sealant in a tire inner cavity when the pneumatic tire is punctured,
the pneumatic tire includes a pneumatic tire body defining the tire inner cavity, and a porous noise damper disposed in the tire inner cavity, and
the noise damper is not fixed to the pneumatic tire body in the tire inner cavity, and is configured to be freely removable from the pneumatic tire body.

### [Present Invention 15]

The vehicle according to Present Invention 14, in which the vehicle is not equipped with a spare tire.

## Claims

1. A pneumatic tire (1) which is to be mounted to a vehicle (25) equipped with a puncture repair kit (20) including a puncture sealant, and for which puncture repair is performed by injecting the puncture sealant into the tire (1), the pneumatic tire (1) comprising:
a pneumatic tire body (1A) defining a tire inner cavity (1B); and
a porous noise damper (10) disposed in the tire inner cavity (1B), wherein
the noise damper (10) is not fixed to the pneumatic tire body (1A) in the tire inner cavity (1B), and is configured to be freely removable from the pneumatic tire body (1A), and
an air permeability of the noise damper (10) as measured in accordance with JIS K6400-7 is 27 ml/cm²/s or less.

2. The pneumatic tire (1) according to claim 1, wherein the noise damper (10) has an annular structure including a first end (10a) in a tire circumferential direction, a second end (10b) in the tire circumferential direction, and an adhering portion (13) for adhering the first end (10a) and the second end (10b) to each other.

3. The pneumatic tire (1) according to claim 2, wherein a greatest length of the noise damper (10) from the first end (10a) to the second end (10b) is 94 to 107% of a greatest circumferential length of the tire inner cavity (1B), in a natural state in which the first end (10a) and the second end (10b) of the noise damper (10) are not adhered to each other.

4. The pneumatic tire (1) according to claim 1, wherein the noise damper (10) has a non-annular structure having a first end (10a) in a tire circumferential direction, and a second end (10b), in the tire circumferential direction, which is not adhered to the first end (10a).

5. The pneumatic tire (1) according to claim 4, wherein a greatest length of the noise damper (10) from the first end (10a) to the second end (10b) is 85 to 99% of a greatest circumferential length of the tire inner cavity (1B).

6. The pneumatic tire (1) according to any one of claims 1 to 5, wherein an outer side surface (10s) of the noise damper (10) in a tire radial direction is planar.

7. The pneumatic tire (1) according to any one of claims 1 to 6, wherein the noise damper (10) is formed of polyurethane sponge having both an ether bond and an ester bond.

8. The pneumatic tire (1) according to any one of claims 1 to 7, wherein a greatest thickness (t1) of the noise damper (10) in a tire radial direction is 10 to 40 mm.

9. The pneumatic tire (1) according to any one of claims 1 to 8, wherein a greatest width (W1) of the noise damper (10) in a tire axial direction is 20 to 80% of a cross-sectional width (Wt) of the pneumatic tire body (1A).

10. The pneumatic tire (1) according to any one of claims 1 to 9, wherein a cross-section, of the noise damper (10), orthogonal to a tire circumferential direction is rectangular.

11. A puncture repair method for a pneumatic tire (1), wherein
the pneumatic tire (1) includes a pneumatic tire body (1A) defining a tire inner cavity (1B), and a porous noise damper (10) disposed in the tire inner cavity (1B),
the noise damper (10) is not fixed to the pneumatic tire body (1A) in the tire inner cavity (1B), and is configured to be freely removable from the pneumatic tire body (1A), the puncture repair method comprising:
a first step (S1) of injecting a puncture sealant into the tire inner cavity (1B) to fill a puncture hole with the puncture sealant; and
a second step (S2) of removing, from the pneumatic tire body (1A), the noise damper (10) that has absorbed a part of the puncture sealant filled in the tire inner cavity (1B).

12. The puncture repair method for a pneumatic tire (1) according to claim 11, further comprising a third step (S3) of disposing, in the tire inner cavity (1B), a new noise damper (10) that has not absorbed the puncture sealant, after the second step (S2).

13. The puncture repair method for a pneumatic tire (1) according to claim 11, wherein a new noise damper (10) is not disposed in the pneumatic tire body (1A) after the second step (S2).

14. A vehicle (25) comprising:
a pneumatic tire (1) mounted thereto; and
a puncture repair kit (20) for repairing a puncture of the pneumatic tire (1),
wherein
the puncture repair kit (20) is configured to inject a puncture sealant in a tire inner cavity (1B) when the pneumatic tire (1) is punctured,
the pneumatic tire (1) includes a pneumatic tire body (1A) defining the tire inner cavity (1B), and a porous noise damper (10) disposed in the tire inner cavity (1B), and
the noise damper (10) is not fixed to the pneumatic tire body (1A) in the tire inner cavity (1B), and is configured to be freely removable from the pneumatic tire body (1A).

15. The vehicle (25) according to claim 14, wherein the vehicle (25) is not equipped with a spare tire.
